# FASCICULE DE BREVET EUROPEEN

(11) **EP 1 876 686 B1**
(45) Date de publication et mention de la délivrance du brevet: **24.06.2009**
(21) Numéro de dépôt: 07301203.1
(22) Date de dépôt: 03.07.2007
(51) Int. Cl.: H02K 3/52, H02K 9/22

(54) **Rotor de machine électrique**
Elektrischer Maschinenrotor
Electric machine rotor

(30) Priorité: 04.07.2006 FR 0652794
(43) Date de publication de la demande: 09.01.2008
(73) Titulaire: MOTEURS LEROY-SOMER, 16000 Angouleme (FR)
(72) Inventeur: Cormier, Julien, 36110, Vineuil (FR)
(74) Mandataire: Tanty, François

(56) Documents cités:
- DE-A1- 2 226 078
- DE-U1- 8 803 135
- FR-A- 2 842 666
- GB-A- 1 393 025
- US-A- 3 766 417
- US-A- 4 554 475
- US-A- 6 054 790

## Description

La présente invention concerne un rotor de machine tournante électrique de forte puissance, encore appelé roue polaire.

La publication FR 2 842 666 divulgue un rotor comportant des pôles saillants ayant des bobines sur lesquelles des radiateurs (encore appelés cales) sont plaqués par des tiges filetées ayant un pas de vis standard (*coarse pitch*)*.*

Lors de la fabrication, les tiges sont serrées une première fois à froid, puis le rotor est passé à l'étuve. Un nouveau serrage est ensuite effectué alors que la machine est encore chaude, de façon à accroître la force avec laquelle les radiateurs sont plaqués sur les bobines et assurer un bon contact thermique. Ce deuxième serrage oblige à une manutention de la machine qui peut s'avérer délicate compte tenu de son poids et de son encombrement.

Afin de simplifier la fabrication, le deuxième serrage peut être omis mais le contact thermique est alors moins bon, amenant à réaliser la bobine avec davantage de cuivre pour réduire l'intensité de son courant donc son échauffement lors du fonctionnement, ce qui a pour inconvénient d'accroître le coût matière.

Il existe également des rotors dans lesquels le serrage s'effectue par l'intermédiaire de rondelles Belleville. La présence de ces dernières est susceptible de nuire à la compacité de la machine et leur mise en place peut s'avérer difficile pour certaines configurations du rotor. De plus, ces rondelles sont susceptibles de perdre en élasticité lors du vieillissement de la machine, réduisant ainsi la fiabilité ou imposant une maintenance accrue.

La publication GB 1 393 025 décrit un rotor de machine tournante électrique comportant des pôles saillants bobinés comportant des radiateurs maintenus plaqués contre les bobines par des rangées de trois tiges filetées avec un même écartement entre les tiges.

Il existe un besoin pour simplifier la fabrication des rotors bobinés sans que cette simplification n'entraîne une dégradation des performances thermiques ni n'amène à accroître la quantité de cuivre ou autre métal utilisé pour compenser un transfert thermique moins bon.

La présente invention a pour objet, une machine tournante électrique selon la revendication 1.

Au moins une rangée de tiges comporte des tiges ayant une répartition non uniforme le long de l'axe du rotor.

Les radiateurs peuvent être plaqués fortement et précisément contre les bobines à froid et un deuxième serrage à chaud n'est plus nécessaire car la qualité du transfert thermique obtenu à froid est nettement supérieure à celle que l'on peut obtenir avec une rangée de tiges réparties uniformément le long de l'axe de rotation.

La quantité de cuivre des bobines n'a ainsi pas à être augmentée pour compenser une dégradation du contact thermique.

L'invention offre également une fiabilité accrue en permettant d'éviter, si cela est souhaité, l'emploi de rondelles Belleville.

La machine peut comporter des écrous engagés sur les tiges filetées et des rondelles s'interposant entre les écrous et les radiateurs de façon à répartir l'effort de serrage sur une surface plus grande et éviter d'endommager la matière des radiateurs, lesquels peuvent être réalisés en aluminium.

Au moins une partie des tiges peut présenter un pas de vis plus fin que le pas de vis standard.

Les tiges filetées présentent par exemple un pas fin donné par le tableau suivant, en fonction du diamètre.

| | | | | | | | | | | | |
|---|---|---|---|---|---|---|---|---|---|---|---|
| Ø vis (mm) | 5 | 6 | 8 | 10 | 12 | 14 | 16 | 18 | 20 | 22 | 24 |
| Pas standard | 0,8 | 1 | 1,25 | 1,5 | 1,75 | 2 | 2 | 2,5 | 2,5 | 2,5 | 3 |
| Pas fin | | | 1 | 1 | 1,25 | 1,5 | 1,5 | 1,5 | 1,5 | 1,5 | 2 |

Que les tiges soient à pas de vis standard ou à pas fin, la machine peut comporter, entre deux pôles, adjacents une rangée de tiges ou deux rangées de tiges filetées, de préférence décalées selon l'axe longitudinal de la machine, notamment une première rangée, extérieure, de tiges filetées relativement longues et une deuxième rangée, intérieure, de tiges filetées plus courtes. Le nombre de pôles est par exemple compris entre 4 et 16 ou plus.

La première rangée comporte par exemple entre 0 et 24 tiges filetées et la deuxième rangée entre 0 et 25 tiges filetées.

En présence de deux rangées de tiges, ce sont les tiges de la rangée extérieure qui peuvent être moins écartées vers les extrémités axiales du rotor tandis que les tiges les plus courtes sont plus rapprochées entre elles vers la mi-longueur du rotor.

Les radiateurs peuvent être identiques ou non.

Les radiateurs peuvent comporter ou non des ailettes.

Les radiateurs peuvent comporter des trous dans lesquels est placée la totalité ou seulement une partie des tiges filetées.

Les radiateurs peuvent être ou non chacun d'un seul tenant. Un radiateur au moins peut comporter plusieurs parties disposées côte à côte le long de l'axe du rotor. Ces parties peuvent être ou non espacées entre elles.

L'invention a encore pour objet un procédé de fabrication d'un rotor de machine tournante électrique selon la revendication 11.

Selon un tel procédé, le serrage des différentes tiges filetées peut être adapté facilement à leur emplacement sur le rotor de façon à produire un serrage permettant de plaquer le radiateur contre la bobine et cette dernière contre le noyau polaire, de manière optimale avec interposition d'isolants éventuels.

De préférence, le serrage s'effectue d'abord dans la région médiane du rotor puis les tiges sont serrées en allant vers les extrémités axiales.

Les vis peuvent être à pas fin ou à pas standard.

Au sein d'une rangée, les tiges successives peuvent être alignées ou non avec les tiges qui précèdent. Les tiges peuvent être disposées en quinconce, le cas échéant.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente de manière schématique, en perspective, un rotor conforme à l'invention,
- la figure 2 est une vue axiale, schématique et partielle, d'un détail de réalisation du rotor,

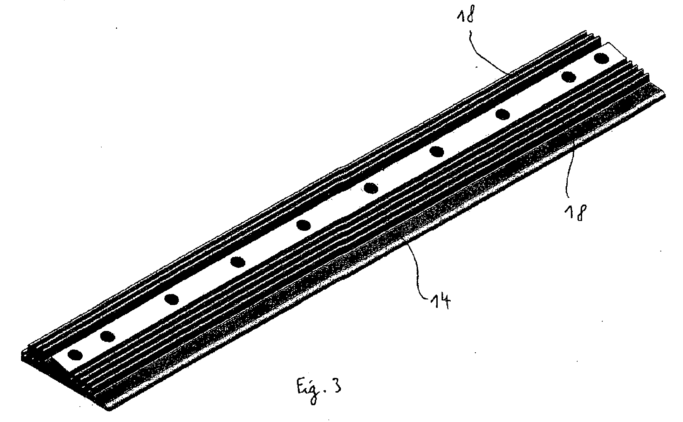

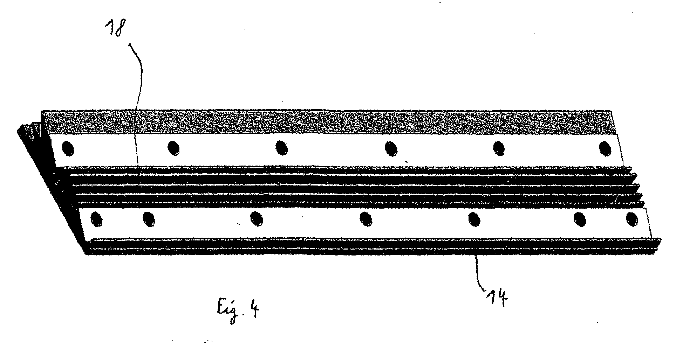

- les figures 3 et 4 représentent, en perspective, des exemples de radiateurs conformes à l'invention, comportant respectivement une ou deux rangées de trous pouvant accueillir les tiges filetées,
- les figures 5 et 7 sont des vues de face de deux radiateurs conformes à l'invention, comportant respectivement une et deux rangées de trous pouvant accueillir les tiges filetées,
- la figure 6 est une coupe transversale, schématique et partielle, du radiateur de la figure 5, et
- la figure 8 est une coupe transversale, schématique et partielle, du radiateur de la figure 7.

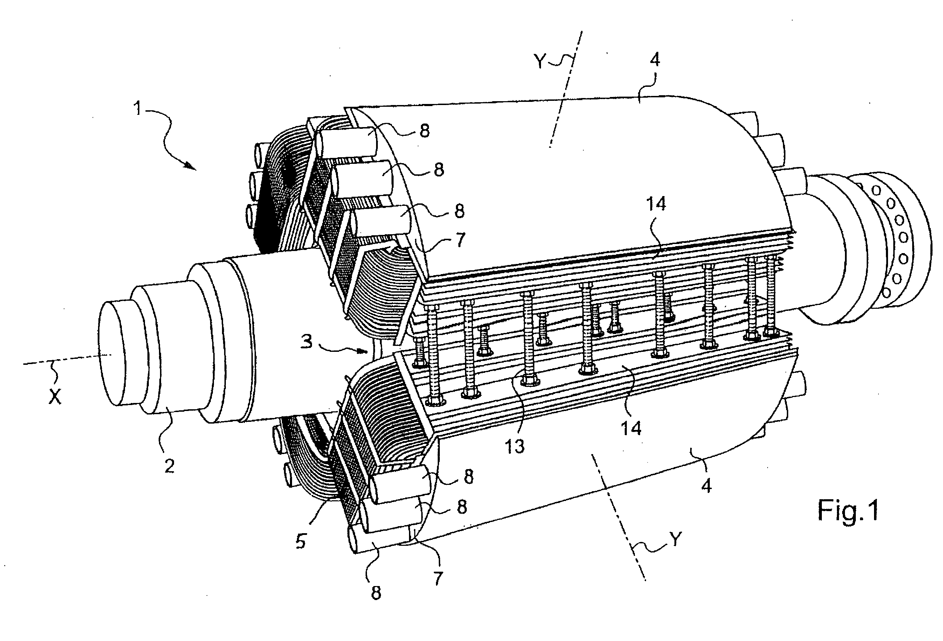

On a représenté sur la figure 1 un rotor 1 d'alternateur destiné à être entraîné en rotation autour d'un axe X, par exemple à une vitesse de 1800 tr/mn, pour fournir une puissance comprise par exemple entre 5 et 15 MW.

Le rotor 1 comporte un arbre 2, dont l'axe longitudinal coïncide avec l'axe X, sur lequel est monté un circuit magnétique 3, qui peut être massif ou non, ce circuit magnétique comportant des noyaux polaires 4 portant chacun une bobine 5 formée par l'enroulement d'au moins un conducteur électrique 6.

Chaque noyau 4 est prolongé par un épanouissement polaire comportant deux cornes polaires 7 s'étendant longitudinalement parallèlement à l'axe X.

Des ensembles de doigts 8 servent à maintenir les têtes des bobines 5, ces doigts 8 pouvant être rapportés ou réalisés par usinage d'un seul tenant avec le circuit magnétique 3.

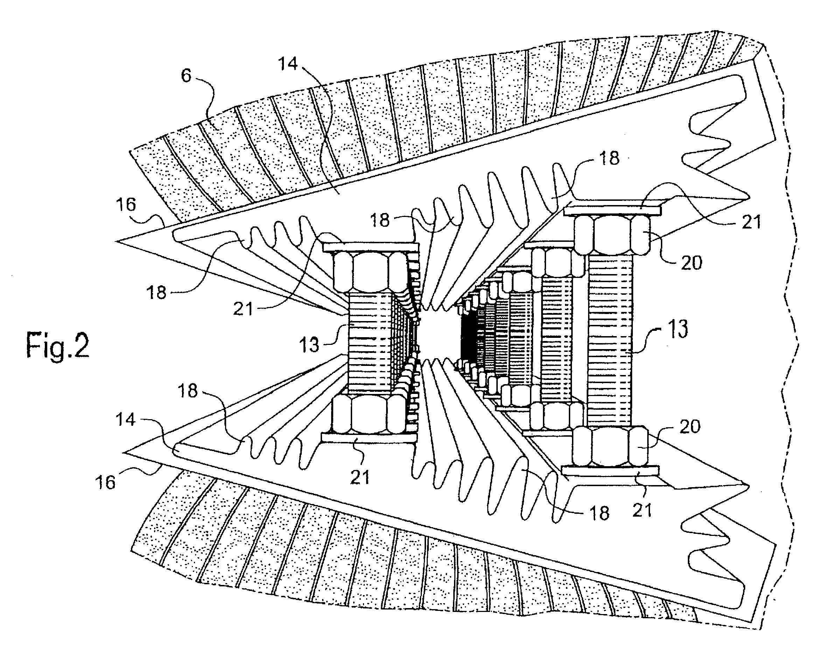

Le rotor 1 comporte, en outre, comme on peut le voir plus particulièrement sur la figure 2, entre deux noyaux polaires 4 consécutifs, des radiateurs 14 venant en appui respectivement sur des isolants 16 recouvrant les flancs adjacents de deux bobines 5 et servant au maintien de celles-ci.

Les radiateurs 14 sont reliés entre eux par deux rangées de tiges filetées 13 qui les maintiennent contre les isolants 16 et comportent des ailettes 18 qui contribuent au refroidissement du rotor. Les radiateurs 14 pourraient encore être réalisés sans ailettes.

Les tiges 13 de l'une des rangées sont plus longues que celles de l'autre rangée et les vis des deux rangées sont décalées selon l'axe longitudinal de la machine.

Les différents diamètres de vis sont généralement proposés par les fabricants soit avec le pas de vis standard (*coarse*), soit avec le pas fin (*fine*) ou extra-fin (*extra fine*).

Des exemples de valeurs de pas ont été donnés dans le tableau plus haut.

Les tiges filetées 13 peuvent être à pas de vis plus fin que le pas de vis standard. En variante, au moins l'une des rangées peut comporter des tiges à pas de vis standard.

La répartition des tiges de chaque rangée est non uniforme le long de l'axe du rotor.

Les tiges filetées 13 de la rangée extérieure peuvent présenter un diamètre différent de celui des tiges de la rangée intérieure, le cas échéant.

La force de serrage de chaque tige filetée 13 est transmise aux radiateurs 14 par des écrous 20 engagés sur la tige 13, ces écrous 20 s'appuyant sur les radiateurs par l'intermédiaire de rondelles 21. Des trous sont réalisés dans les radiateurs pour recevoir les extrémités des tiges 13 s'étendant au-delà des rondelles 21.

Lors de la fabrication de la machine, les écrous 20 sont serrés à l'aide de clés dynamométriques afin d'avoir un serrage relativement uniforme des radiateurs 14 sur les bobines 5. Le serrage est de préférence effectué à partir de la région médiane vers les extrémités axiales.

Lorsque les vis sont à pas fin, le serrage peut être plus précis et de meilleure qualité qu'avec les tiges à pas de vis standard.

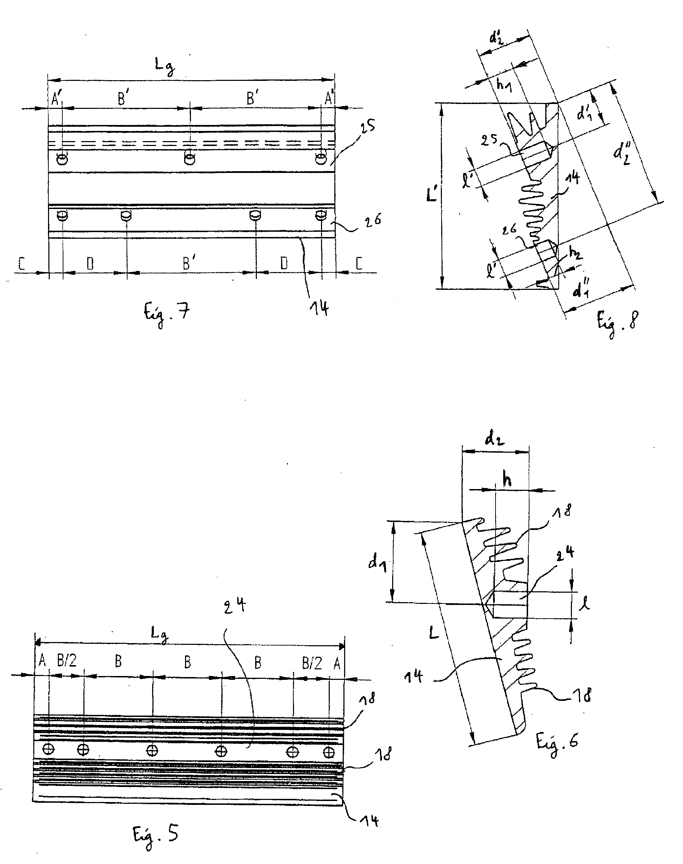

La figure 5 représente un radiateur comportant six trous borgnes pouvant accueillir les tiges filetées. Le nombre de trous peut aller de six à onze, par exemple en fonction de la dimension du rotor 1.

Le radiateur 14 de la figure 5 comporte deux rangées d'ailettes 18, la plage 24 sur laquelle sont formés les trous destinés à accueillir les tiges filetées 13 ayant une largeur *l* comprise par exemple entre 10 et 20 mm, par exemple voisine de 14,5 mm et une hauteur *h* comprise par exemple entre 10 et 20 mm, par exemple voisine de 17,5 mm.

La largeur L du radiateur 14 peut être comprise par exemple entre 100 et 150 mm, par exemple voisine de 120 mm.

La distance d₁, mesurée perpendiculairement à l'axe des tiges filetées 13, entre le bord longitudinal interne du radiateur 14 et la plage 24 peut être comprise par exemple entre 30 et 60 mm, par exemple égale à 44,5 mm. De plus, la distance d₂ mesurée parallèlement aux tiges filetées 13 entre le bord longitudinal interne du radiateur 14 et la plage 24 peut être par exemple comprise entre 30 et 60 mm, par exemple égale à 35, 5 mm.

L'écartement B des trous dans la partie centrale de la rangée peut aller de 80 à 100 mm en fonction de la dimension du rotor 1, par exemple de 88 à 96 mm.

Dans l'exemple considéré, l'écartement des trous à proximité des extrémités axiales du radiateur peut être deux fois moins important que l'écartement en partie centrale, étant égal à B/2 par exemple.

Par ailleurs, l'écartement A entre un trou situé à proximité d'une extrémité axiale du radiateur et le bord correspondant peut aller de 15 à 25 mm en fonction de la dimension du rotor 1, par exemple de 19 à 24 mm.

Des exemples de valeur des écartements A et B dans la plage 24 et du nombre de trous en fonction de la longueur Lg du radiateur 14 sont donnés dans le tableau suivant :

| Lg | A | B | Nombre de trous |
|---|---|---|---|
| 870 | 21 | 92 | 11 |
| 840 | 24 | 88 | 11 |
| 810 | 21 | 96 | 10 |
| 780 | 22 | 92 | 10 |
| 750 | 19 | 89 | 10 |
| 720 | 21 | 85 | 10 |
| 690 | 21 | 81 | 10 |
| 660 | 22 | 88 | 9 |
| 630 | 21 | 84 | 9 |
| 600 | 20 | 80 | 9 |
| 570 | 21 | 88 | 8 |
| 540 | 21 | 83 | 8 |
| 510 | 20 | 94 | 7 |
| 480 | 20 | 88 | 7 |
| 450 | 20 | 82 | 7 |
| 420 | 20 | 95 | 6 |

La figure 7 représente un radiateur 14 comportant deux rangées de trous borgnes ménagées sur deux plages 25 et 26, ces rangées comportant respectivement trois et quatre trous pouvant accueillir les tiges filetées 13.

Le nombre de trous réalisés sur la plage 25 peut aller par exemple de trois à six et le nombre de trous disposés sur la plage 26 peut aller de quatre à sept, en fonction de la dimension du rotor 1.

La largeur L' du radiateur 14 peut varier entre 100 et 200 mm, étant égale par exemple à 151 mm dans l'exemple des figures 7 et 8.

La largeur *l*' des plages 25 et 26 peut varier entre 10 et 20 mm, étant par exemple égale à 14, 5 mm. La hauteur *h₁* de la plage 25 peut par exemple être comprise entre 15 et 25 mm, étant par exemple égale à 21,5 mm. La hauteur *h₂* de la plage 26 peut être comprise entre 10 et 20 mm, étant par exemple égale à 12 mm.

La distance *d₁'* mesurée perpendiculairement aux tiges filetées 13 entre le bord longitudinal interne du radiateur 14 et l'axe du trou situé sur la plage 25 peut être comprise entre 20 et 50 mm, étant par exemple égale à 31 mm. La distance *d₂*' mesurée parallèlement aux tiges filetées 13 entre le bord longitudinal interne du radiateur 14 et l'axe d'un trou situé sur la plage 25 peut être comprise entre 30 et 50 mm, étant par exemple égale à 43,7 mm.

La distance *d₁''* mesurée perpendiculairement aux tiges filetées 13 entre l'extrémité du bord longitudinal interne du radiateur 14 et l'axe d'un trou situé sur la plage 26 peut être comprise entre 40 et 80 mm, étant par exemple égale à 61,5 mm. La distance *d₂''* mesurée sur un axe perpendiculairement aux tiges filetées 13 entre le bord longitudinal interne du radiateur 14 et l'axe d'un trou situé sur la plage 26 peut être comprise entre 80 et 120 mm, étant par exemple égale à 106 mm.

Dans l'exemple considéré, la distance B' séparant deux trous disposés sur la plage 25 peut varier de 130 à 190 mm en fonction de la dimension du rotor 1 et la distance A' séparant un trou d'une extrémité axiale du radiateur 14 peut varier de 18 à 20 mm en fonction de la dimension du rotor 1.

La distance B' séparant les deux trous de la partie centrale de la plage 26 peut être la même que celle séparant deux trous de la plage 25.

La distance D séparant deux trous situés à proximité d'une extrémité axiale du rotor 1 peut aller de 66 à 95 mm par exemple, et la distance C séparant un trou d'une extrémité axiale du radiateur 14 peut varier de 18 à 20 mm selon la dimension du rotor 1.

Des exemples de valeurs des écartements A', B', C, D et du nombre de trous des plages 25 et 26 en fonction de la longueur Lg du radiateur 14 sont donnés dans le tableau suivant :

| Lg | A' | B' | C | D | Nombre de trous plage 25 | Nombre de trous plage 26 |
|---|---|---|---|---|---|---|
| 750 | 20 | 142 | 20 | 71 | 6 | 7 |
| 720 | 20 | 136 | 20 | 68 | 6 | 7 |
| 690 | 19 | 163 | 19 | 81,5 | 5 | 6 |
| 660 | 20 | 155 | 20 | 77,5 | 5 | 6 |
| 630 | 19 | 148 | 19 | 74 | 5 | 6 |
| 600 | 20 | 140 | 20 | 70 | 5 | 6 |
| 570 | 19 | 133 | 19 | 66 ?5 | 5 | 6 |
| 540 | 18 | 168 | 18 | 84 | 4 | 5 |
| 510 | 18 | 158 | 18 | 79 | 4 | 5 |
| 480 | 18 | 148 | 18 | 74 | 4 | 5 |
| 450 | 18 | 138 | 18 | 69 | 4 | 5 |
| 420 | 20 | 190 | 20 | 95 | 3 | 4 |
| 390 | 19 | 176 | 19 | 88 | 3 | 4 |
| 360 | 20 | 160 | 20 | 80 | 3 | 4 |

L'invention n'est pas limitée aux exemples qui viennent d'être décrits. Les tiges filetées peuvent être réalisées avec une tête à une extrémité, par exemple. Le filetage des tiges filetées peut ne s'étendre que sur une partie de leur longueur. Les tiges filetées peuvent être réalisées par exemple avec des vis sans tête six pans creuses à bout plat ou à bout pointu.

Un marquage peut être effectué à mi-longueur de la tige filetée par exemple par un écrasement de filetage ou avec de la peinture, afin d'indiquer à l'opérateur le milieu de la tige et éviter que l'opérateur n'amène par un mauvais serrage la tige à traverser le radiateur, ce qui pourrait endommager le rotor.

L'expression « comportant un » doit être comprise comme étant synonyme de « comportant au moins un », sauf si le contraire est spécifié.

## Revendications

1. Machine tournante électrique (1) comportant un rotor comprenant des pôles saillants bobinés comportant des radiateurs (14) maintenus plaqués contre les bobines (5) par des rangées, de tiges filetées (13), **caractérisée par le fait qu'**au moins une rangée de tiges (13) présente un écartement entre les tiges qui est moindre à proximité des extrémités axiales du rotor.

2. Machine selon la revendication 1, **caractérisée par le fait qu'**au moins une partie des tiges (13) présente un pas de vis plus fin que le pas de vis standard.

3. Machine selon la revendication 2, dans laquelle toutes les tiges (13) présentent un pas de vis plus fin que le pas de vis standard.

4. Machine selon la revendication 3, les tiges filetées (13) présentant un diamètre choisi parmi 5, 6, 8, 10, 12, 14, 16, 18, 20, 22, 24 mm et des pas de vis respectivement inférieurs à 0,8 ; 1 ; 1,25 ; 1,5 ; 1,75 ; 2 ; 2 ; 2,5 ; 2,5 ; 2,5 ; 3 mm.

5. Machine selon l'une quelconque des revendications précédentes, comportant des écrous (20) engagés sur les tiges (13) et des rondelles (21) s'interposant entre les écrous et les radiateurs (14).

6. Machine selon l'une quelconque des revendications précédentes, comportant entre deux pôles adjacents deux rangées de tiges filetées (13) décalées selon l'axe longitudinal (X) de la machine.

7. Machine selon la revendication 6, comportant entre deux pôles adjacents une première rangée, extérieure, de tiges filetées relativement longues et une deuxième rangée, intérieure, de tiges filetées plus courtes.

8. Machine selon l'une quelconque des revendications précédentes, la répartition des tiges de chaque rangée étant non uniforme le long de l'axe du rotor.

9. Machine selon la revendication 7, les tiges de la rangée extérieure étant moins écartées vers les extrémités axiales du rotor.

10. Machine selon l'une quelconque des revendications précédentes, les tiges filetées présentant un marquage à mi-longueur.

11. Procédé de fabrication d'un rotor de machine tournante électrique comportant des pôles saillants bobinés, ces pôles saillants comprenant des bobines (5) sur lesquelles sont maintenus plaqués des radiateurs (14) par des rangées de tiges filetées (13), au moins une rangée de tiges, présentant un écartement entre les tiges qui est moindre à proximité des extrémités axiales du rotor, les tiges étant serrées à froid uniquement, à l'aide d'au moins une clé dynamométrique.

12. Procédé selon la revendication précédente, le serrage s'effectuant d'abord dans la région médiane du rotor puis les tiges étant serrées en allant vers les extrémités axiales.

## Claims

1. Rotating electrical machine (1) comprising a rotor, comprising projecting wound poles comprising radiator elements (14) held flat against the windings (5) by rows of threaded rods (13), **characterised by** the fact that at least one row of rods (13) has a spacing between the rods which is lesser in the vicinity of the axial ends of the rotor.

2. Machine according to Claim 1, **characterised by** the fact that at least a part of the rods (13) has a thread pitch, which is finer than the standard thread pitch.

3. Machine according to Claim 2, in which all the rods (13) have a thread pitch, which is finer than the standard thread pitch.

4. Machine according to Claim 3, with the threaded rods (13) having a diameter chosen from among 5, 6, 8, 10, 12, 14, 16, 18, 20, 22, 24 mm and thread pitches respectively less than 0.8; 1; 1.25; 1.5; 1.75; 2; 2; 2.5; 2.5; 2.5; 3 mm.

5. Machine according to any of the foregoing claims, comprising bolts (20) engaged on the rods (13) and washers (21) interposed between the bolts and the radiator elements (14).

6. Machine according to any of the foregoing claims, comprising between two adjacent poles, two rows of threaded rods (13), spaced according to the longitudinal axis (X) of the machine.

7. Machine according to Claim 6, comprising between two adjacent poles, a first row, on the outside, of relatively long threaded rods, and a second row, on the inside, of shorter threaded rods.

8. Machine according to any of the foregoing claims, the distribution of the rods of each row being non-uniform along the axis of the rotor.

9. Machine according to Claim 7, the rods of the outside row being less spaced apart towards the axial ends of the rotor.

10. Machine according to any of the foregoing claims, with the threaded rods having a marking at mid-length.

11. Method for the manufacture of an electric machine rotor, comprising projecting wound poles, these poles comprising windings (5) on which radiator elements (14) are held flat by the rows of threaded rods (13), at least one row of rods has a spacing between the rods which is lesser in the vicinity of the axial ends of the rotor, the rods being tightened in a cold state only, with the aid of at least one dynamometric spanner.

12. Method according to the foregoing claim, the tightening being effected first in the median region of the rotor, and the rods then being tightened going towards the axial ends.

## Patentansprüche

1. Elektrische Drehmaschine (1), enthaltend einen Rotor mit bespulten Schenkelpolen, welche Kühlkörper (14) aufweisen, welche mit Reihen von Gewindestangen (13) auf den Spulen befestigt sind, **dadurch gekennzeichnet, daß** mindestens eine Reihe der Stangen (13) zwischen den Stangen einen Abstand aufweist, welcher an den axialen Enden des Rotors geringer ist.

2. Maschine nach Anspruch 1, **dadurch gekennzeichnet, daß** zumindest ein Teil der Stangen (13) ein feineres Gewinde als das Standardgewinde aufweist.

3. Maschine nach Anspruch 2, in der sämtliche Stangen (13) ein feineres Gewinde als das Standardgewinde aufweisen.

4. Maschine nach Anspruch 3, wobei die Gewindestangen (13) einen aus den Durchmessern 5, 6, 8, 10, 12, 14, 16, 18, 20, 22, 24 mm gewählten Durchmesser und eine Gewindesteigung aufweisen, welche jeweils entsprechend geringer als 0,8; 1; 1,25; 1,5; 1,75; 2; 2; 2,5; 2,5; 2,5; 3 mm ist.

5. Maschine nach einem der vorhergehenden Ansprüche mit Muttern (20), welche mit den Stangen (13) in Eingriff sind, und Unterlagscheiben (21), welche zwischen den Muttern und den Kühlkörpern (14) liegen.

6. Maschine nach einem der vorhergehenden Ansprüche, welche zwischen zwei benachbarten Polen zwei Reihen von Gewindestangen (13) enthält, welche entlang der Längsachse (X) der Maschine versetzt sind.

7. Maschine nach Anspruch 6, welche zwischen zwei benachbarten Polen eine erste, äußere Reihe relativ langer Gewindestangen und eine zweite, innere Reihe kürzerer Gewindestangen enthält.

8. Maschine nach einem der vorhergehenden Ansprüche, wobei die Verteilung der Stangen jeder Reihe entlang der Rotorachse ungleichmäßig ist.

9. Maschine nach Anspruch 7, wobei die Stangen der äußeren Reihe zu den axialen Enden des Rotors hin geringere Abstände aufweisen.

10. Maschine nach einem der vorhergehenden Ansprüche, wobei die Gewindestangen in der Mitte eine Markierung aufweisen.

11. Verfahren zur Herstellung eines Rotors einer elektrischen Drehmaschine mit bespulten Schenkelpolen, welche Spulen (5) enthalten, auf welche mit Reihen von Gewindestangen (13) Kühlkörper (14) befestigt sind, wobei mindestens eine Stangenreihe einen Abstand zwischen den Stangen aufweist, welcher in der Nähe der axialen Enden des Rotors geringer ist, und wobei die Stangen mit einem Drehmomentschlüssel lediglich kalt eingespannt werden.

12. Verfahren nach vorigem Anspruch, wobei das Einspannen zuerst im Mittelabschnitt des Rotors durchgeführt wird, und dann die Stangen zu den axialen Enden hin eingespannt werden.
